# FASCICULE DE BREVET EUROPEEN

(11) **EP 3 840 300 B1**
(45) Date de publication et mention de la délivrance du brevet: **19.10.2022**
(21) Numéro de dépôt: 20214864.9
(22) Date de dépôt: 17.12.2020
(51) Int. Cl.: H04L 45/00, H04L 12/54

(54) **RÉCEPTION D'UN FLUX DE DONNÉES VIA UNE PASSERELLE DE COMMUNICATION**
EMPFANG EINES DATENFLUSSES ÜBER EINE KOMMUNIKATIONSSCHNITTSTELLE
RECEPTION OF A DATA STREAM VIA A COMMUNICATION GATEWAY

(30) Priorité: 19.12.2019 FR 1914919
(43) Date de publication de la demande: 23.06.2021
(73) Titulaire: Softathome, 92700 Colombes (FR)
(72) Inventeur: MAKOWSKI, Wojciech, 78100 Saint-Germain-en-Laye (FR)
(74) Mandataire: Cabinet Beau de Loménie

(56) Documents cités:
- EP-A1- 3 337 121
- PEIRENS PROXIMUS G DETAL S BARRE O BONAVENTURE TESSARES B: "Link bonding with transparent Multipath TCP; draft-peirens-mptcp-transparent-00.txt", LINK BONDING WITH TRANSPARENT MULTIPATH TCP; DRAFT-PEIRENS-MPTCP-TRANSPARENT-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 juillet 2016 (2016-07-08), pages 1-21, XP015114289,
- BOUCADAIR M ET AL: "Network-Assisted MPTCP: Use Cases, Deployment Scenarios and Operational Considerations; draft-nam-mptcp-deployment-considerations- 01.txt", NETWORK-ASSISTED MPTCP: USE CASES, DEPLOYMENT SCENARIOS AND OPERATIONAL CONSIDERATIONS; DRAFT-NAM-MPTCP-DEPLOYMENT-CONSIDERATIONS- 01.TXT, INTERNET ENGINEERING TASK FORCE, IETF; STANDARDWORKINGDRAFT, INTERNET SOCIETY (ISOC) 4, RUE DES FALAISES CH- 120, 7 décembre 2016 (2016-12-07), pages 1-29, XP015116956,

## Description

### Domaine Technique

L'invention se rapporte au domaine des télécommunications et porte plus particulièrement sur l'échange de données entre une passerelle de communication et un réseau de communication distant.

### Technique antérieure

De façon connue, on peut aujourd'hui utiliser un routeur pour relier un réseau local à un réseau de communication distant tel qu'Internet par exemple. Un tel routeur, appelé plus généralement passerelle de communication, peut ainsi fournir à un quelconque terminal (ordinateur, téléphone portable, périphérique etc.) du réseau local un accès à Internet. La communication entre le terminal du réseau local et le routeur peut se faire via une connexion sans fil, de type Wifi par exemple. Un tel routeur peut par exemple servir de point d'accès en mode Wifi au réseau local d'un ménage ou d'une entreprise.

Une multitude d'utilisateurs peuvent ainsi accéder aujourd'hui sur leur terminal à des contenus disponibles sur Internet. Pour ce faire, une passerelle de communication assure l'interface entre le terminal de l'utilisateur et les serveurs des fournisseurs de contenu accessibles sur Internet.

Fournir des contenus, de type multimédia par exemple, peut cependant constituer un défi majeur pour les fournisseurs de contenu, notamment lorsqu'il y a une forte demande pour un contenu particulier parmi les utilisateurs. Ainsi, les fournisseurs de contenu rencontrent dans certains cas des difficultés pour assurer la fourniture d'un contenu multimédia populaire qui rencontre une forte demande dans un temps réduit. La fourniture, en particulier en temps réel, de certains contenus populaires peut nécessiter des ressources importantes au niveau des serveurs des fournisseurs de contenu. Si l'infrastructure des fournisseurs de contenu n'est pas suffisante, un contenu très demandé peut ne pas être fourni aux utilisateurs dans des conditions satisfaisantes. Les fournisseurs de contenu sont donc contraints d'investir dans des équipements coûteux afin d'assurer un service de fourniture de contenu (services VOD, services musicaux etc.) offrant une bonne expérience d'utilisateur.

Plus généralement, il existe un besoin pour une faciliter la fourniture d'un flux de données entre un réseau de communication et une passerelle de communication d'un réseau local.

### Exposé de l'invention

Un but de l'invention est de remédier aux inconvénients exposés ci-dessus.

A cet effet, la présente invention concerne un premier procédé de communication mis en œuvre par une première passerelle de communication faisant l'interface entre un réseau local et un réseau de communication, comprenant les étapes suivantes :
- identification d'un flux de données à transmettre au réseau local ;
- détection qu'une deuxième passerelle de communication est en cours de réception du flux de données en provenance du réseau de communication ;
- en réponse à ladite détection, envoi d'une requête d'accès à la deuxième passerelle de communication pour établir une connexion sans fil entre la première passerelle de communication agissant en tant que client et la deuxième passerelle de communication agissant en tant que point d'accès au réseau de communication ; et
- réception, via ladite connexion sans fil, d'au moins une partie dudit flux de données transmis par la deuxième passerelle de communication.

La première passerelle est ainsi capable d'utiliser une autre passerelle pour faire transiter au moins une partie d'un flux de données émis par le serveur distant. L'utilisation d'une passerelle tierce permet à la première passerelle d'obtenir un flux de donnée (ou un contenu) souhaité sans augmenter la charge de travail du serveur distant, dans la mesure où la première passerelle récupère ce flux de données d'une autre passerelle qui est déjà en cours de réception dudit flux. Cette autre passerelle sert ainsi de relais par lequel transite le flux de données que la première passerelle souhaite recevoir.

Selon un exemple particulier, l'étape de détection comprend :
- envoi, à la deuxième passerelle de communication, d'une requête de contenu pour demander si la deuxième passerelle de communication est en cours de réception dudit flux de données ; et
- réception, en provenance de la deuxième passerelle de communication, d'une donnée indiquant que ladite deuxième passerelle est en cours de réception du flux de données provenant du réseau de communication.

Selon un exemple particulier, le premier procédé comprend une détermination que ledit flux de données présente un degré de probabilité prédéfini que la deuxième passerelle de communication est en cours de réception du flux de données en provenance du réseau de communication,
dans lequel la première passerelle de communication envoie la requête de contenu à la deuxième passerelle de communication en réponse à ladite détermination.

Selon un exemple particulier, la détermination que ledit flux de données présente ledit degré de probabilité prédéfini que la deuxième passerelle de communication est en cours de réception du flux de données est réalisée à partir d'au moins une caractéristique dudit flux de données.

Selon un exemple particulier, la deuxième passerelle de communication reçoit le flux de données provenant du réseau de communication en mode de diffusion multipoint,
et, lors de l'étape de réception, la première passerelle de communication reçoit ladite au moins une partie du flux de données via la connexion sans fil en mode de connexion point à point avec la deuxième passerelle de communication.

Selon un exemple particulier, le premier procédé est tel que :
- la première passerelle de communication envoie une dite requête d'accès à une pluralité de deuxièmes passerelles de communication pour établir une deuxième connexion entre la première passerelle de communication agissant en tant que client et chaque deuxième passerelle de communication agissant en tant que point d'accès au réseau de communication ; et
- lors de réception, ladite au moins une partie du flux de données est reçue via les deuxièmes connexions sans fil établies avec la pluralité de deuxièmes passerelles de communication.

Selon un exemple particulier, lors de l'étape de réception, via la connexion sans fil, de ladite au moins une partie dudit flux de données transmise par la deuxième passerelle de communication, la première passerelle de communication reçoit en parallèle une autre partie du flux de données depuis le réseau de communication sans passer par une autre passerelle de communication agissant en tant que point d'accès.

Selon un exemple particulier, la connexion sans fil est de type Wifi.

Dans un mode particulier de réalisation, les différentes étapes du premier procédé communication sont déterminées par des instructions de programmes d'ordinateurs.

En conséquence, l'invention vise aussi un programme d'ordinateur sur un support d'informations, ce programme étant susceptible d'être mis en œuvre dans un dispositif tel qu'une passerelle de communication, ou plus généralement dans un ordinateur, ce programme comportant des instructions adaptées à la mise en œuvre des étapes d'un premier procédé de communication tel que définis ci-dessus.

L'invention vise aussi un support d'enregistrement (ou support d'informations) lisible par un ordinateur, et comportant des instructions d'un programme d'ordinateur tel que mentionné ci-dessus.

L'invention concerne également un deuxième procédé de communication mis en œuvre par une première passerelle de communication faisant l'interface entre un réseau local et un réseau de communication, comprenant les étapes suivantes :
- envoi, à une deuxième passerelle de communication, d'une donnée indiquant que ladite première passerelle est en cours de réception d'un flux de données provenant du réseau de communication ;
- réception, provenant de la deuxième passerelle de communication, d'une requête d'accès pour établir une connexion sans fil entre la première passerelle de communication agissant en tant que point d'accès au réseau de communication et la deuxième passerelle de communication agissant en tant que client ; et
- transmission, à la deuxième passerelle de communication, d'au moins une partie du flux de données via ladite connexion sans fil.

Selon un exemple particulier, la première passerelle de communication envoie ladite donnée à la deuxième passerelle de communication en réponse à une requête de contenu reçue en provenance de ladite deuxième passerelle, la requête de contenu identifiant ledit flux de données.

Selon un exemple particulier, la première passerelle de communication reçoit le flux de données provenant du réseau de communication en mode de diffusion multipoint,
et, lors de l'étape de transmission, la première passerelle de communication transmet ladite au moins une partie du flux de données via la connexion sans fil en mode de connexion point à point avec la deuxième passerelle de communication.

Selon un exemple particulier, la connexion sans fil est de type Wifi.

Dans un mode particulier de réalisation, les différentes étapes du deuxième procédé communication sont déterminées par des instructions de programmes d'ordinateurs.

En conséquence, l'invention vise aussi un programme d'ordinateur sur un support d'informations, ce programme étant susceptible d'être mis en œuvre dans un dispositif tel qu'une passerelle de communication, ou plus généralement dans un ordinateur, ce programme comportant des instructions adaptées à la mise en œuvre des étapes d'un deuxième procédé de communication tel que définis ci-dessus.

L'invention vise aussi un support d'enregistrement (ou support d'informations) lisible par un ordinateur, et comportant des instructions d'un programme d'ordinateur tel que mentionné ci-dessus.

A noter que les programmes mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention vise aussi une première passerelle de communication configurée pour faire l'interface entre un réseau local et un réseau de communication, comprenant :
- un module d'identification configuré pour identifier un flux de données à transmettre au réseau local ;
- un module de détection configuré pour détecter qu'une deuxième passerelle de communication est en cours de réception du flux de données en provenance du réseau de communication ;
- un module d'envoi configuré pour envoyer une requête d'accès à la deuxième passerelle de communication pour établir une connexion sans fil entre la première passerelle de communication agissant en tant que client et la deuxième passerelle de communication agissant en tant que point d'accès au réseau de communication ; et
un module de réception configuré pour recevoir, via ladite connexion sans fil, au moins une partie dudit flux de données transmis par la deuxième passerelle de communication.

L'invention vise en outre une deuxième passerelle de communication configurée pour faire l'interface entre un réseau local et un réseau de communication, comprenant :
- un module d'envoi configuré pour envoyer, à une première passerelle de communication, une donnée indiquant que ladite deuxième passerelle est en cours de réception d'un flux de données provenant du réseau de communication ;
- un module de réception configuré pour recevoir, en provenance de la première passerelle de communication, une requête d'accès pour établir une connexion sans fil entre la deuxième passerelle de communication agissant en tant que point d'accès au réseau de communication et la première passerelle de communication agissant en tant que client ; et
- un module de transmission configuré pour transmettre, à la deuxième passerelle de communication, au moins une partie du flux de données via ladite connexion sans fil.

A noter que les différents modes de réalisation définis ci-avant en relation avec les premier et deuxième procédés de communication s'appliquent par analogie aux passerelles de communication définies ci-dessus.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Pour chaque étape des premier et deuxième procédés de l'invention, les passerelles de communication de l'invention peuvent comprendre un module correspondant configuré pour réaliser ladite étape.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] la figure 1 représente schématiquement un environnement comprenant des passerelles de communication faisant l'interface entre des réseaux locaux respectifs et un réseau de communication distant, conformément à un mode de réalisation particulier de l'invention ;
[Fig. 2] la figure 2 représente schématiquement un ensemble de modules mis en œuvre par une première passerelle de communication, conformément à un mode de réalisation particulier de l'invention ;
[Fig. 3] la figure 3 représente schématiquement un ensemble de modules mis en œuvre par une deuxième passerelle de communication, conformément à un mode de réalisation particulier de l'invention ;
[Fig. 4] la figure 4 représente, sous forme d'un ordinogramme, les étapes de procédés de communication mis en œuvre par des passerelles de communication, conformément à un mode de réalisation particulier de l'invention ; et
[Fig. 5] la figure 5 représente, sous forme d'un ordinogramme, les étapes d'un procédé de communication mis en œuvre par une passerelle de communication selon une variante de réalisation.

### Description des modes de réalisation

Comme indiqué ci-avant, l'invention porte sur la fourniture d'un flux de données depuis un réseau de communication vers une passerelle de communication assurant l'interface avec un réseau local.

Dans ce document, une passerelle de communication (appelé aussi « passerelle », ou encore « gateway » an anglais) désigne un dispositif, tel qu'un modem ou un routeur par exemple, configuré pour faire l'interface entre deux réseaux de communication distincts, de sorte à relier par exemple un réseau local et un réseau de communication distant (Internet par exemple). Une passerelle assure le routage des données échangées entre les deux réseaux en question et peut également mettre en œuvre diverses fonctions associées, tels que des fonctions de pare-feu, de proxy etc.

L'invention se propose de faciliter la réception, par une passerelle de communication, d'un flux de données provenant d'un réseau de communication distant, ladite passerelle de communication faisant l'interface entre un réseau local et le réseau de communication distant. Comme déjà indiqué, dans certaines situations, un fournisseur de contenu peut rencontrer des difficultés à fournir un contenu - sous la forme d'un flux de données - à des utilisateurs, notamment lorsqu'il y a une forte demande pour le contenu en question. Fournir un large volume de données à des utilisateurs dans un temps réduit requiert des infrastructures importantes du côté des fournisseurs de contenu ou des opérateurs.

L'invention propose de permettre à une première passerelle de coopérer via une connexion sans fil avec au moins une deuxième passerelle de communication, voisine de ladite première passerelle, de sorte à ce que la ou les deuxièmes passerelles servent de points d'accès à la première passerelle pour accéder à un réseau de communication distant (de type Internet par exemple). Lorsqu'une telle deuxième passerelle est en cours de réception d'un flux de donné particulier, la première passerelle peut alors en bénéficier en recevant le flux de données via cette deuxième passerelle.

La première passerelle peut ainsi faire appel à une deuxième passerelle agissant en tant que point d'accès au réseau de communication distant pour obtenir le flux de données souhaité. Le transit des données par la ou les deuxièmes passerelles permet d'éviter au réseau de communication distant de fournir de façon répétée un même contenu à différentes passerelles, limitant ainsi les ressources nécessaires côté fournisseurs de contenu.

L'invention concerne la première passerelle et la ou les deuxièmes passerelles telles qu'exposées ci-dessus et vise en outre les procédés de communication mis en œuvre respectivement par ces passerelles pour permettre un transfert de données depuis le réseau de communication distant vers la première passerelle.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

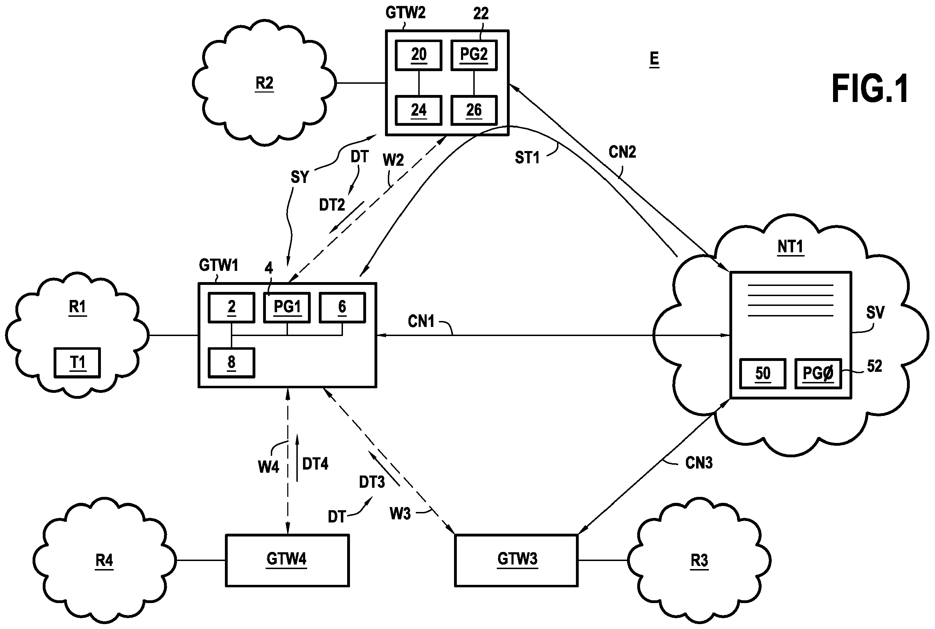

La **figure 1** représente, de manière schématique, un environnement E comportant un ensemble de passerelles de communication GTW1, GTW2, GTW3 et GTW4 conformes à un mode de réalisation de l'invention. Chacune de ces passerelles GTW1-GTW4 est configurée pour faire l'interface entre un réseau local respectif R1, R2, R3 et R4 d'une part, et un réseau de communication distant NT1 d'autre part. Dans cet exemple, les passerelles GTW1-GTW4 sont chacune configurées pour servir de point d'accès, pour leur réseau local respectif R1-R4, au réseau de communication NT1.

La première passerelle GTW1 et la deuxième passerelle GTW2 forment ensemble un système de communication noté SY.

On suppose ici que les passerelles GTW1-GTW4 sont reliées à leur réseau local respectif R1-R4 par une liaison de communication sans fil, de type Wifi par exemple. On comprend que des liaisons de communication filaires ou sans fil, autres que de type Wifi, sont toutefois possibles telles qu'une liaison de type liaison filaire, courants porteurs en ligne, Bluetooth^{®} ou équivalent.

On suppose par ailleurs que le réseau de communication NT1 est un réseau Internet, comportant dans cet exemple un serveur SV configuré pour échanger des données avec les réseaux locaux R1-R4 via leur passerelle GTW1-GTW4 respective. Des réseaux de communication NT1 autres qu'Internet sont toutefois possibles.

Chaque réseau local R1-R4 peut comporter au moins un terminal quelconque agissant en tant que client du point de vue de la passerelle GTW1-GTW4 associée. Le réseau local R1 comporte ici par exemple un terminal T1 (par exemple un ordinateur, un téléphone mobile, ou équivalent) configuré pour se connecter à sa passerelle GTW1 par une liaison sans fil de type Wifi afin de communiquer avec le réseau de communication distant NT1, et plus particulièrement avec le serveur distant SV dans cet exemple.

Comme illustré en **figure 1**, les passerelles GTW1, GTW2 et GTW3 peuvent par exemple établir une liaison de communication notée respectivement CN1, CN2 et CN3 avec le serveur distant SV du réseau de communication NT1. Chacune de ces connexions CN1-CN3 est apte à assurer le transit de données de façon bidirectionnelle (communications montantes et descendantes) entre le serveur distant SV et la passerelle correspondante.

Par ailleurs, dans cet exemple de réalisation, les passerelles de communication GTW1-GTW4 sont configurées pour communiquer entre elles via des connexions (ou liaisons de communication) sans fil. On suppose par exemple ici que la première passerelle GTW1 est configurée pour communiquer avec les passerelles GTW2, GTW3 et GTW4 via une connexion sans fil W2, W3 et W4 respectivement. Les connexions sans fil W2-W4 sont dans cet exemple de type Wifi, bien que d'autres types de connexion sans fil soient possibles (par exemple de type Bluetooth^{®}, ou équivalent).

L'établissement de ces connexions sans fil W2-W4 est ici possible car les passerelles GTW2-GTW4 sont situées dans le voisinage de la première passerelle GTW1, c'est-à-dire à portée de communication de ladite passerelle GTW1. Chaque passerelle GTW1-GTW4 est par exemple positionnée dans un lieu distinct (une maison, une école, un lieu de travail...), ces lieux étant situés à proximité les uns des autres. Comme expliqué par la suite, ces connexions sans fil W2-W4 permettent aux passerelles GTW1-GTW4 de coopérer entre elles pour mettre en œuvre l'invention selon un mode de réalisation particulier.

Les passerelles GTW2, GTW3 et GWT4 peuvent par exemple envoyer des données respectives DT2, DT3 et DT4 (notées collectivement DT) à la passerelle GTW1 via les connexions sans fil correspondantes W2-W4. Les données DT2-DT4 permettent respectivement aux passerelles GTW2-GTW4 d'indiquer à la première passerelle GTW1 un flux de données qu'elles sont en train de recevoir en provenance du réseau de communication NT1. A partir par exemple d'une donnée DT2 fournie par la deuxième passerelle GTW2, la première passerelle GTW1 est informée que la deuxième passerelle GTW2 est en cours de réception d'un flux de données déterminé. Pour ce faire, chaque donnée DT peut comprendre au moins un identifiant d'un flux de données qui est en cours de réception au niveau de la passerelle à l'origine de l'envoi de ladite donnée DT.

Dans l'exemple illustré en **figure 1**, la première passerelle GTW1 centralise les données DT émises par les passerelles voisines GTW2-GTW4. On comprend toutefois que chaque autre passerelle GTW2-GTW4 peut agir de façon analogue à la passerelle GTW1, bien que cela ne soit ni illustré ni décrit par souci de simplicité.

La **figure 1** représente en outre schématiquement la structure de la première passerelle GTW1, conformément à un mode de réalisation particulier.

Plus précisément, la première passerelle GTW1 comprend dans cet exemple au moins un processeur 2, une mémoire non volatile 4, une première interface de communication 6 et une deuxième interface de communication 8.

La mémoire 4 est une mémoire non volatile réinscriptible (Flash ou EEPROM par exemple) ou une mémoire morte (ROM), cette mémoire constituant un support d'enregistrement (ou support d'informations) conforme à un mode de réalisation particulier, lisible par la passerelle GTW1, et sur lequel est enregistré un programme d'ordinateur PG1 conforme à un mode de réalisation particulier. Ce programme d'ordinateur PG1 comporte des instructions pour l'exécution des étapes d'un premier procédé de communication selon un mode de réalisation particulier.

La première interface de communication 6 est configurée pour assurer l'interface via une connexion sans fil avec le réseau local R1. Dans cet exemple, la passerelle GTW1 utilise cette première interface de communication 6 pour communiquer via une connexion sans fil de type Wifi avec le terminal T1 du réseau local R1.

La deuxième interface de communication 8 est configurée pour assurer l'interface avec le réseau de communication distant NT1. La passerelle GTW1 utilise ici cette deuxième interface 8 pour communiquer via une connexion quelconque (filaire par exemple, ADSL ou autre) avec le serveur distant SV du réseau distant NT1.

Les données DT susceptibles d'être reçues par la première passerelle GTW1 en provenance des autres passerelles voisines GTW2-GTW4 peuvent par exemple être enregistrées dans une mémoire non volatile réinscriptible (non représentée) de la passerelle GTW1.

La **figure 1** représente également schématiquement la structure de la deuxième passerelle GTW2, conformément à un mode de réalisation particulier. La deuxième passerelle GTW2 présente ici une structure analogue à la structure de la première passerelle GTW1 décrite ci-avant.

Plus précisément, la deuxième passerelle GTW2 comprend dans cet exemple au moins un processeur 20, une mémoire non volatile 22, une première interface de communication 24 et une deuxième interface de communication 26.

La mémoire 22 est une mémoire non volatile réinscriptible (Flash ou EEPROM par exemple) ou une mémoire morte (ROM), cette mémoire constituant un support d'enregistrement (ou support d'informations) conforme à un mode de réalisation particulier, lisible par la passerelle GTW2, et sur lequel est enregistré un programme d'ordinateur PG2 conforme à un mode de réalisation particulier. Ce programme d'ordinateur PG2 comporte des instructions pour l'exécution des étapes d'un deuxième procédé de communication selon un mode de réalisation particulier.

La première interface de communication 24 est configurée pour assurer l'interface via une connexion sans fil avec le réseau local R2. Dans cet exemple, la passerelle GTW2 peut utiliser cette première interface de communication 24 pour communiquer via une connexion sans fil de type Wifi avec un terminal quelconque (non représenté) du réseau local R2.

La deuxième interface de communication 26 est configurée pour assurer l'interface avec le réseau de communication distant NT1. La passerelle GTW1 utilise ici cette deuxième interface 26 pour communiquer via une quelconque connexion (filaire par exemple, ADSL ou autre) avec le serveur distant SV du réseau distant NT1.

Les autres passerelles GTW3 et GTW4 présentant une structure analogue à celle de la deuxième passerelle GTW2, elles ne seront pas décrites plus détail par souci de simplicité.

La **figure 1** représente également schématiquement la structure du serveur distant SV, conformément à un mode de réalisation particulier. Dans cet exemple, le serveur distant SV est situé dans le réseau de communication NT1 et présente la structure d'un ordinateur. Plus précisément, le serveur SV comporte notamment dans cet exemple un processeur 50, ainsi qu'une mémoire non volatile 52 dans laquelle est enregistré un programme d'ordinateur PG0 conforme à un mode de réalisation particulier.

Dans cet exemple, le serveur SV est sous le contrôle d'un fournisseur de contenu et permet par exemple la fourniture de contenus numériques (contenus multimédias par exemple) aux passerelles GTW1-GTW4. Pour ce faire, le serveur SV est apte à transmettre un flux de données à au moins une parmi les passerelles GTW1-GTW4.

On comprend ici que certains éléments généralement présents dans une passerelle de communication et dans un serveur ont été volontairement omis car ils ne sont pas nécessaires à la compréhension de la présente invention.

On comprendra par ailleurs que les passerelles GTW1-GTW4 et le serveur SV représentés en **figure 1** ne constituent qu'un exemple de réalisation particulier, d'autres mises en œuvre étant possibles dans le cadre de l'invention. L'homme du métier comprend en particulier que certains éléments des passerelles GTW1 et GTW2 ne sont décrits ici que pour faciliter la compréhension de l'invention, ces éléments n'étant pas nécessaires pour mettre en œuvre l'invention.

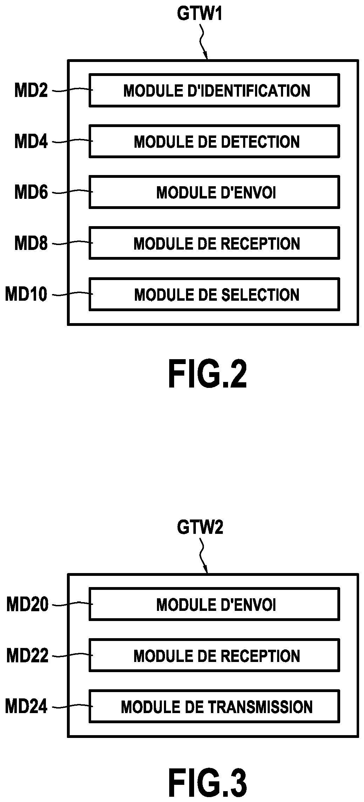

Comme représenté en **figure 2** dans un mode de réalisation particulier, le processeur 2 de la première passerelle GTW1 piloté par le programme d'ordinateur PG1 met ici en œuvre un certain nombre de modules, à savoir : un module d'identification MD2, un module de détection MD4, un module d'envoi MD6, un module de réception MD8 et un module de sélection MD10.

Le module d'identification MD2 est configuré pour identifier un flux de données ST1 à transmettre au réseau local R1. L'identification du flux de données ST1 souhaité peut par exemple se faire en réponse à une requête émise par un utilisateur depuis le terminal T1 appartenant au réseau local T1. Dans un exemple particulier, le module d'identification MD2 identifie un flux de données correspondant à un contenu (ou programme), de type multimédia par exemple. On comprend toutefois que le flux de données que l'on vise ici à transférer depuis le serveur distant SV jusqu'à la première passerelle GTW1 peut être est de type quelconque et peut comporter tous types de données.

Le module de détection MD4 est configuré pour détecter qu'au moins l'une parmi les passerelles GTW2-GTW4 est en cours de réception, en provenance du réseau de communication NT1, du flux de données ST1 identifié par le module d'identification MD2.

Le module d'envoi MD6 est configuré, en réponse à la détection qu'une autre passerelle de communication (GTW2 par exemple) est en cours de réception du flux de données ST1 en provenance du réseau de communication NT1, pour envoyer une requête d'accès (noté par la suite RQ4) à cette autre passerelle de communication pour établir une connexion sans fil (W2 dans cet exemple) entre la première passerelle GTW1 agissant en tant que client et ladite autre passerelle de communication agissant alors en tant que point d'accès au réseau de communication NT1.

Le module de réception MD8 est configuré pour recevoir, via ladite connexion sans fil ainsi établie, tout ou partie dudit flux de données ST1 transmis par l'autre passerelle de communication (GTW2 dans cet exemple).

Comme expliqué par la suite, la première passerelle GTW1 est ainsi capable d'utiliser une autre passerelle (GTW2 par exemple) pour faire transiter au moins une partie d'un flux de données ST1 émis par le serveur distant SV. L'utilisation d'une passerelle tierce permet à la première passerelle GTW1 d'obtenir un flux de donnée souhaité sans augmenter la charge de travail du serveur distant SV, dans la mesure où la première passerelle GTW1 récupère ce flux de données d'une autre passerelle qui est déjà en cours de réception dudit flux. Cette autre passerelle sert ainsi de relais par lequel transite le flux de données que la première passerelle GTW1 souhaite recevoir.

On notera que le module d'envoi MD6 peut être configuré pour envoyer une dite requête d'accès à une pluralité de passerelles (GTW2 et GTW3 par exemple) pour établir une connexion sans fil entre la première passerelle GTW1 agissant en tant que client et chaque autre passerelle agissant alors en tant que point d'accès au réseau de communication NT1. Dans ce cas, le module de réception MD8 peut être configuré pour recevoir, via chaque connexion sans fil ainsi établie, une partie du flux de données ST1 transmis par lesdites autres passerelles. La première passerelle GTW1 peut ainsi récupérer un flux de données déterminé en faisant appel à d'autres passerelles se trouvant à portée de communication et étant déjà en cours de réception du flux de données en question.

Comme représenté en **figure 3** dans un mode de réalisation particulier, le processeur 20 de la deuxième passerelle GTW2 piloté par le programme d'ordinateur PG2 met ici en œuvre un certain nombre de modules, à savoir : un module d'envoi MD20, un module de réception MD22 et un module MD24 de transmission de données.

Le module d'envoi MD20 est configuré pour envoyer, à la première passerelle GTW1, une donnée DT2 comme déjà décrite ci-avant, cette donnée DT2 indiquant que ladite deuxième passerelle GTW2 est en cours de réception du flux de données ST1 provenant du réseau de communication NT1 (et plus particulièrement du serveur SV dans cet exemple).

Le module de réception MD22 est configuré pour recevoir, en provenance de la première passerelle de communication GTW1, une requête d'accès (notée par la suite RQ4) pour établir une connexion sans fil W2 entre la deuxième passerelle GTW2 agissant en tant que point d'accès au réseau de communication NT1 et la première passerelle GTW1 agissant en tant que client (ou dispositif client).

Le module de transmission MD24 est configuré pour transmettre, à la première passerelle GTW1, tout ou partie du flux de données ST1 via ladite connexion sans fil W2.

Le module de transmission MD24 peut ainsi transférer tout le flux de données ST1 émis par le serveur distant SV vers la première passerelle GTW1. Selon un autre exemple, seule une partie du flux ST1 transite par la deuxième passerelle GTW2, le reste dudit flux ST1 étant éventuellement transmis via au moins une autre passerelle (GTW3 par exemple) et/ou directement depuis le serveur distant SV (via la connexion CN1), c'est-à-dire sans passer par une autre passerelle agissant en tant que point d'accès au réseau de communication NT1.

Le fonctionnement des modules MD2-MD10 de la première passerelle GTW1 et des modules MD20-MD24 de la deuxième passerelle GTW2 apparaîtra plus précisément dans les exemples de réalisation décrits ci-après. On comprend que les modules MD2-MD10 et MD20-MD24 tels que décrits ci-dessus ne constituent qu'un exemple de mise en œuvre non limitatif de l'invention.

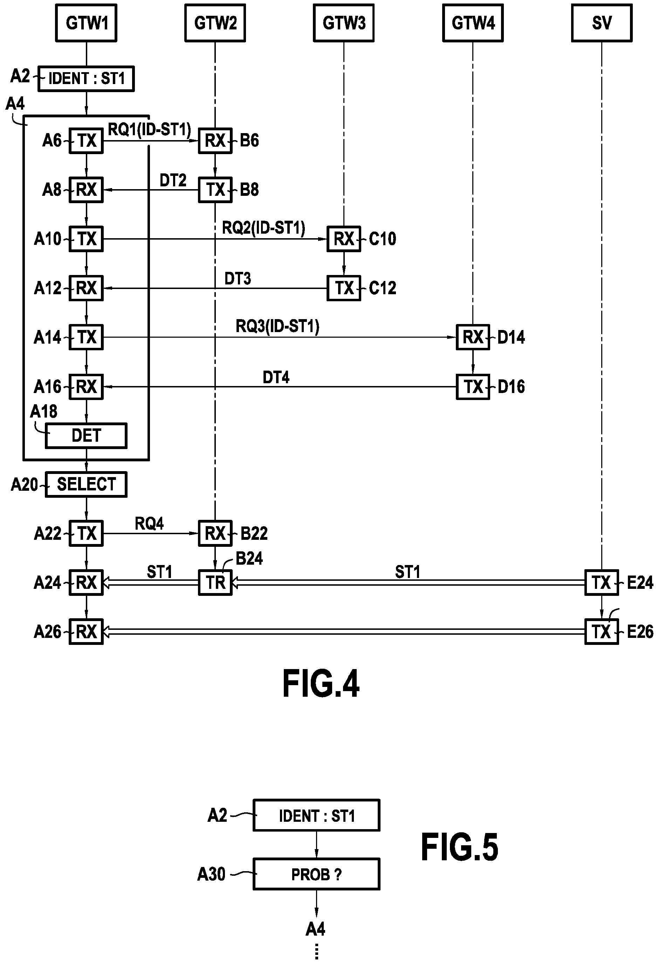

Un mode de réalisation particulier est à présent décrit en référence à la **figure 4**. Plus précisément, la première passerelle GTW1 illustrée en **figures 1-2** met ici en œuvre un premier procédé de communication selon un mode de réalisation particulier, en exécutant le programme PG1. De même, la deuxième passerelle GTW2 illustrée en **figures 1** et **3** met ici en œuvre un deuxième procédé de communication selon un mode de réalisation particulier, en exécutant le programme PG2.

Comme illustré en **figure 1**, on suppose ici que le terminal T1 du réseau local R1 est configuré pour recevoir un flux de données ST1 en provenance du serveur distant SV situé dans le réseau de communication NT1. Pour ce faire, le terminal T1 utilise sa passerelle GTW1 qui fait l'interface avec le serveur distant SV.

Au cours d'une étape d'identification A2, la première passerelle GTW1 identifie un flux de données, à savoir le flux ST1, à transmettre au réseau local R1. Cette identification A2 se fait par exemple en réponse à une requête (non représentée) reçue au préalable par la passerelle GTW1 en provenance du terminal T1 du réseau local R1, cette requête identifiant le flux de données ST1 comme un flux cible à récupérer depuis le réseau de communication NT1. Le flux de données ST1 peut être identifié (A2) par la première passerelle GTW1 selon une quelconque méthode appropriée.

Au cours d'une étape de détection A4, la première passerelle GTW1 détecte si une deuxième passerelle, à savoir la passerelle GTW2, est en cours de réception du flux de données ST1 en provenance du réseau de communication NT1. Autrement dit, la première passerelle GTW1 détermine si la deuxième passerelle GTW2 a une session en cours avec le serveur distant SV pour recevoir le flux de données ST1. Pour ce faire, dans l'exemple considéré ici, la première passerelle GTW1 envoie (A6) via la liaison sans fil W2 (**figure 1**) une requête de contenu RQ1 à la deuxième passerelle GTW2, cette requête comportant un identifiant ID-ST1 du flux de données ST1 que la première passerelle GTW1 souhaite recevoir. Cette requête RQ1 vise à demander à la deuxième passerelle GTW2 si cette dernière est en cours de réception du flux de données ST1 en provenance du réseau de communication NT1. En réponse à cette requête de contenu RQ1 reçue en B6, la deuxième passerelle GTW2 envoie (B8) une donnée DT2 à la première passerelle GTW1, cette donnée DT2 indiquant si la deuxième passerelle GTW2 est effectivement en train de recevoir le flux de données ST1 identifié par la première passerelle GTW1 en A2. La passerelle GTW1 reçoit la donnée DT1 indicative de la réponse de la deuxième passerelle GTW2 lors d'une étape de réception A8.

On suppose dans cet exemple que la première passerelle GTW1 envoie de la même manière, lors d'étapes d'envoi A10 et A14, une requête de contenu notée respectivement RQ2 et RQ3 aux passerelles GTW3 et GTW4. Ces requêtes de contenu RQ2 et RQ3, transmises via les liaisons sans fil W3 et W4, comportent ici aussi l'identifiant ID-ST1 du flux de données ST1 et sont reçus par les passerelles GTW3 et GTW4 lors d'étapes de réception C10 et D14, respectivement. En réponse à ces requêtes de contenu RQ2 et RQ3, les passerelles GTW3 et GTW4 envoient (C12, D16) respectivement une donnée DT3 et DT4 à la première passerelle GTW1, ces données DT3 et DT4 indiquant si les passerelles GTW3 et GTW4 sont respectivement en cours de réception du flux de données ST1 souhaité par la première passerelle GTW1. La première passerelle GTW1 reçoit les données DT3 et DT4 indicatives des réponses des passerelles GTW3 et GTW4 lors d'étapes de réception A12 et A16, respectivement.

Bien que la première passerelle GTW1 envoie dans cet exemple une requête de contenu RQ1-RQ3 à une pluralité de passerelles voisines GTW2-GTW4, on comprend qu'il est possible que la première passerelle GTW1 n'envoie une requête de contenu qu'à une seule autre passerelle voisine (GTW2 par exemple). Selon un exemple particulier, la première passerelle GTW1 dispose en mémoire d'une liste d'au moins une passerelle voisine vers laquelle elle doit envoyer une requête de contenu lors de l'étape de détection A4.

Selon un exemple particulier, les passerelles GTW2, GTW3 et GTW4 envoient leurs données respectives DT2-DT4 sans répondre à une sollicitation de la première passerelle GTW1 (mode push). Les passerelles GTW2-GTW4 envoie par exemple de façon périodique une donnée DT identifiant un ou des flux de données qu'elles sont en train de recevoir en provenance du réseau distant NT1.

Dans le cas illustré en **figure 4**, la passerelle GTW1 enregistre par exemple dans sa mémoire les données DT2, DT3 et DT4 reçues en A8, A12 et A16.

A partir des données DT2, DT3 et DT4, la première passerelle GTW1 détermine (A18) ainsi la ou les passerelles, parmi celles (GTW2-GTW4) se trouvant dans son voisinage, qui sont déjà en train de recevoir le flux de données ST1. On suppose ici par exemple que la première passerelle GTW1 détecte lors de l'étape de détection A4 que les passerelles GTW2 et GTW3 sont en cours de réception du flux de données ST1.

Lors d'une étape de sélection A12, la première passerelle GTW1 sélectionne l'une parmi les passerelles GTW2 et GTW3 ayant indiqué en A4 qu'elles sont en cours de réception du flux ST1. Dans cet exemple, on suppose que la première passerelle GTW1 sélectionne la deuxième passerelle GTW2 lors de l'étape de sélection A20.

Cette sélection A20 peut être réalisée selon une quelconque façon appropriée. Dans un exemple particulier, la première passerelle GTW1 sélectionne en A20 celle parmi les passerelles GTW2 et GTW3 qui présentent la meilleure qualité de connexion sur les liaisons sans fil W2 et W3. Pour ce faire, la première passerelle GTW1 comporte par exemple des moyens pour évaluer la qualité de connexion des liaisons sans fil W2-W4. D'autres critères prédéfinis peuvent être pris en compte lors de la sélection A20, comme par exemple un ordre de préférence prédéfini des passerelles voisines susceptibles de coopérer avec la première passerelle GTW1 pour faire transiter le flux de données ST1, comme expliqué ci-après. Comme expliqué par la suite, la première passerelle GTW1 peut également sélectionner en A20 une pluralité de passerelles voisines identifiées en A18 comme étant en cours de réception du flux de données ST1.

Selon d'autres exemples de réalisation, aucune sélection A20 n'est nécessaire en tant que telle, par exemple si une seule autre passerelle voisine (GTW2 par exemple) est identifiée en A18 comme étant en cours de réception du flux de données ST1. Cette seule autre passerelle est utilisée par défaut en tant que relais comme expliqué ci-après.

Dans cet exemple de réalisation, une fois la deuxième passerelle GTW2 sélectionnée en A20, la première passerelle GTW1 envoie (A22) une requête d'accès RQ4 à ladite deuxième passerelle GTW2. Cette requête RQ4 vise à établir une connexion sans fil W2 (de type Wifi dans cet exemple) entre la première passerelle de communication GTW1 agissant alors en tant que client et la deuxième passerelle de communication GTW2 agissant en tant que point d'accès au réseau de communication NT1 (**figure 1**). Autrement dit, la première passerelle GTW1 demande, au moyen de la requête d'accès RQ4, à la deuxième passerelle GTW2 d'agir à son égard en tant qu'un point d'accès du réseau distant NT1. La deuxième passerelle GTW2 reçoit la requête d'accès RQ4 lors d'une étape de réception B22. Selon un exemple particulier, cette connexion sans fil W2 est établie avant l'étape de détection A4, voire avant l'étape d'identification A2.

En réponse à requête d'accès RQ4, la deuxième passerelle GTW2 agit (B24) alors en tant que point d'accès du réseau de communication NT1 pour la première passerelle GTW1. Plus précisément, au cours d'une étape B24 de transfert, la deuxième passerelle GTW1 transfert via la connexion sans fil W2 le flux de données ST1 qu'elle reçoit via la connexion CN2 depuis le réseau distant NT1. La première passerelle GTW1 reçoit ainsi en A24 le flux de données ST1 qui est émis (E24) par le serveur SV et qui transite (B24) par la deuxième passerelle GTW2 jouant ici le rôle de relais.

Selon un exemple particulier, la totalité du flux de données ST1 reçu par la deuxième passerelle GTW2 est transféré par cette dernière à la première passerelle GTW1 lors de l'étape de transmission B24.

Selon un autre exemple, seule une partie du flux de données ST1 est transmise par la deuxième passerelle GTW2 lors de l'étape de transmission B24. Ceci peut se produire par exemple lorsque la qualité de connexion de la liaison sans fil W2 n'est pas suffisante pour faire transiter tout le flux ST1 par la deuxième passerelle GTW2. Dans ce cas, en parallèle de la partie du flux de données ST1 reçue (A24) via la deuxième passerelle GTW2, la première passerelle GTW1 peut recevoir une autre partie du flux de données ST1 directement du serveur distant SV via la liaison CN1, c'est-à-dire sans passer par une autre passerelle agissant en tant que point d'accès au réseau de communication NT1. Dans cette variante, la première passerelle GTW1 peut ainsi recevoir simultanément des données provenant du réseau distant NT1 via deux canaux de communication distincts, à savoir via la connexion CN1 d'une part, et via la liaison comportant la connexion sans fil W2 et la connexion CN2 d'autre part.

Selon un exemple de réalisation particulier, la première passerelle GTW1 sélectionne lors de l'étape de sélection A20 une pluralité de passerelles parmi les passerelles candidates GTW2-GTW4. Dans ce cas, la première passerelle GTW1 envoie en A22 une requête d'accès RQ4 à chacune des passerelles sélectionnées en A20 afin que ces dernières agissent chacune en tant que point d'accès de la première passerelle GTW1. La première passerelle GTW1 peut ainsi recevoir simultanément des données provenant du réseau distant NT1 via différentes passerelles tierces fonctionnant en tant que points d'accès au réseau de communication NT1.

Selon un exemple de réalisation particulier, la deuxième passerelle GTW2 reçoit le flux de données ST1 provenant du réseau de communication NT1 en mode de diffusion multipoint et, lors de l'étape de réception A24, la première passerelle GTW1 reçoit tout ou partie du flux de données ST1 via la connexion sans fil W2 en mode de connexion point à point avec la deuxième passerelle GTW2.

Le mode de diffusion multipoint (appelé aussi « diffusion de groupe » ou « multicast ») consiste à diffuser des données depuis une source, en l'occurrence le serveur distant SV dans cet exemple, vers un groupe de récepteurs comprenant ici la deuxième passerelle GTW2. Le mode de connexion point à point (ou mode « unicast ») définit par ailleurs une connexion réseau d'un dispositif hôte vers un seul autre dispositif hôte, en l'occurrence les passerelles GTW1 et GTW2 dans l'exemple décrit ci-dessus.

La présente invention permet de faciliter la réception, par une passerelle de communication, d'un flux de données provenant d'un réseau de communication distant, ladite passerelle de communication faisant l'interface entre un réseau local et le réseau de communication distant. Comme décrit ci-dessus, l'invention propose de permettre à une première passerelle de coopérer via une connexion sans fil avec au moins une deuxième passerelle de communication, voisine de ladite première passerelle, de sorte à ce que la ou les deuxièmes passerelles servent de points d'accès pour accéder à un réseau de communication distant (de type Internet par exemple). Lorsqu'une telle deuxième passerelle est en cours de réception d'un flux de donné particulier, la première passerelle peut alors en bénéficier en recevant le flux de données via la deuxième passerelle.

Comme décrit précédemment, un fournisseur de contenu peut rencontrer des difficultés à fournir un contenu à des utilisateurs, en particulier lorsqu'il y a une forte demande pour le contenu en question. Fournir un large volume de données à des utilisateurs dans un temps réduit requiert des infrastructures importantes du côté des fournisseurs de contenu ou des opérateurs. Grâce à l'invention, le serveur d'un fournisseur de contenu n'a pas besoin d'envoyer individuellement un même flux de données à une pluralité de passerelles de communication. Lorsqu'une première passerelle détecte qu'elle doit récupérer un flux de données particulier, elle peut avantageusement faire appel à une autre passerelle se trouvant à portée de communication et qui est déjà en cours de réception du flux de données en question. Le flux de données est alors retransmis par cette autre passerelle à la première passerelle, ce qui permet de ne pas augmenter la charge de travail du serveur du fournisseur de contenu. L'obtention du flux de données par la première passerelle est alors transparente du point de vue de l'infrastructure du fournisseur de contenu.

L'invention permet d'éviter l'envoi répété par un fournisseur de contenu d'un même flux de données à une pluralité de passerelles, économisant de ce fait l'infrastructure nécessaire dans le réseau pour fournir un contenu particulier, notamment lorsque celui-ci rencontre une forte demande.

Grâce à l'invention, une passerelle peut jouer son rôle traditionnel de point d'accès pour un réseau local et aussi devenir un client, en mode Wifi par exemple, vis-à-vis d'une autre passerelle. De cette manière, l'accès à du contenu hébergé dans un réseau distant est facilité sans que cela nécessite la mise en œuvre de nouvelles infrastructures. On peut avantageusement tirer profit d'un réseau existant de passerelles de communication connectées entre elles via des liaisons sans fil dans un espace donné pour améliorer l'accès de chaque passerelle à un réseau distant.

Par ailleurs, lorsqu'une première passerelle perd son accès direct à un réseau de communication, elle peut palier à ce problème en utilisant une passerelle tierce comme point d'accès, ce qui permet de sécuriser l'accès audit réseau. Une telle sécurisation est notamment avantageuse pour la mise en œuvre de services d'importance critique (services d'urgence, de santé, de sécurité...).

De façon avantageuse, une passerelle peut sélectionner plusieurs passerelles situées dans son voisinage afin d'améliorer encore d'avantage sa qualité de réception d'un flux de données provenant d'un réseau de communication distant.

Une variante du mode de réalisation illustré en **figure 4** est à présent décrite en référence à la **figure 5**.

De façon analogue aux exemples de réalisation précédents, on suppose ici aussi que le terminal T1 du réseau local R1 est configuré pour recevoir un flux de données ST1 en provenance du serveur distant SV situé dans le réseau de communication NT1 (**figure 1**). Pour ce faire, le terminal T1 utilise sa passerelle GTW1 qui fait l'interface avec le serveur distant SV.

Selon cette variante illustrée en **figure 5**, la première passerelle GTW1 identifie le flux de données le flux ST1 à transmettre au réseau local R1 au cours d'une étape d'identification A2 analogue à celle représentée en **figure 4**.

La première passerelle GTW1 détermine (A30) ensuite si le flux de données ST1 identifié en A2 présente un degré de probabilité prédéfini que la deuxième passerelle GTW2 est en cours de réception dudit flux de données ST1 en provenance du réseau de communication NT1. Autrement dit, la première passerelle GTW1 détermine (A30) s'il y a une probabilité suffisante que la deuxième passerelle GTW2 soit en cours de réception du flux de données ST1. Uniquement dans l'affirmative, la première passerelle GTW1 procède alors à l'étape de détection A4 de façon analogue à l'étape A4 décrite en référence à la **figure 4**, de sorte à détecter si la deuxième passerelle GTW2 est effectivement en train de recevoir le flux ST1. En revanche, s'il est peu probable que la deuxième passerelle GTW2 est en train de recevoir le flux de données ST1, la première passerelle ST1 ne lui envoie pas de requête de contenu en A4.

La première passerelle GTW1 détermine (A30) par exemple si le flux de données ST1 présente un degré de probabilité prédéfini que la deuxième passerelle GTW2 est en cours de réception dudit flux de données ST1 en provenance du réseau de communication NT1, à partir d'au moins caractéristique du flux de données ST1. Dans un exemple particulier, la première passerelle GTW1 détecte par exemple le type du contenu du flux ST1 (film, émission, musique...) et/ou l'identité du contenu en question (nom du film, titre d'une chanson...), et détermine à partir de ces informations s'il est probable que la deuxième passerelle GTW2 soit déjà en train de recevoir le flux de données ST1 en question. Cette détermination peut être réalisée à partir de données d'historisation stockées dans la première passerelle GTW1, ces données d'historisation étant indicatives des flux de données qui sont reçus au fil du temps par la deuxième passerelle GTW2 de sorte à ce qu'il soit possible de prédire les contenus que la deuxième passerelle GTW2 a le plus de chance de recevoir par la suite.

Selon un exemple particulier, la première passerelle GTW1 réalise l'étape de détermination A30 pour une pluralité de passerelles voisines, en l'occurrence pour les passerelles GTW2, GTW3 et GTW4 dans cet exemple. La première passerelle GTW1 n'envoie (A4) ainsi une requête de contenu qu'à celle(s) parmi ces passerelles voisines qui ont une probabilité suffisante d'être déjà en train de recevoir le flux de données ST1.

Cette variante de réalisation permet avantageusement de cibler efficacement la ou les passerelles voisines à qui la première passerelle GTW1 envoie une requête de contenu lors de l'étape de détection A4. La première passerelle GTW1 ne tente de coopérer qu'avec les passerelles voisines qui ont des chances suffisantes d'être en train de recevoir le flux ST1, limitant ainsi l'envoi des requêtes de contenu dans le réseau, notamment lorsqu'un grand nombre de passerelles voisines se trouvent à portée de communication dans le réseau.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de communication mis en œuvre par une première passerelle de communication (GTW1) faisant l'interface entre un réseau local (R1) et un réseau de communication (NT1), comprenant les étapes suivantes :
- identification d'un flux de données (ST1) à transmettre au réseau local (R1) ;
- détection qu'une deuxième passerelle de communication (GTW2) est en cours de réception du flux de données (ST1) en provenance du réseau de communication (NT1) ;
- envoi d'une requête d'accès (RQ4) à la deuxième passerelle de communication (GTW2) pour établir une connexion sans fil entre la première passerelle de communication (GTW1) agissant en tant que client et la deuxième passerelle de communication (GTW2) agissant en tant que point d'accès au réseau de communication (NT1) ; et
- réception, via ladite connexion sans fil, d'au moins une partie dudit flux de données transmis par la deuxième passerelle de communication (GTW2).

2. Procédé selon la revendication 1, dans lequel l'étape de détection comprend :
- envoi, à la deuxième passerelle de communication (GTW2), d'une requête de contenu (RQ1) pour demander si la deuxième passerelle de communication est en cours de réception dudit flux de données ; et
- réception, en provenance de la deuxième passerelle de communication (GTW2), d'une donnée (DT1) indiquant que ladite deuxième passerelle est en cours de réception du flux de données (ST1) provenant du réseau de communication (NT1).

3. Procédé selon la revendication 2, comprenant une détermination que ledit flux de données (ST1) présente un degré de probabilité prédéfini que la deuxième passerelle de communication (GTW2) est en cours de réception du flux de données (ST1) en provenance du réseau de communication (NT1),
dans lequel la première passerelle de communication (GTW1) envoie la requête de contenu (RQ1) à la deuxième passerelle de communication (GTW2) en réponse à ladite détermination.

4. Procédé selon la revendication 3, dans lequel la détermination que ledit flux de données (ST1) présente ledit degré de probabilité prédéfini que la deuxième passerelle de communication (GTW2) est en cours de réception du flux de données (ST1) est réalisée à partir d'au moins une caractéristique dudit flux de données.

5. Procédé selon l'une quelconque des revendications 1 à 4, dans lequel la deuxième passerelle de communication (GTW2) reçoit le flux de données provenant du réseau de communication (NT1) en mode de diffusion multipoint,
et dans lequel, lors de l'étape de réception, la première passerelle de communication (GTW1) reçoit ladite au moins une partie du flux de données via la connexion sans fil en mode de connexion point à point avec la deuxième passerelle de communication (GTW2).

6. Procédé selon l'une quelconque des revendications 1 à 5, dans lequel :
- la première passerelle de communication (GTW1) envoie une dite requête d'accès à une pluralité de deuxièmes passerelles de communication (GTW2, GTW3) pour établir une deuxième connexion entre la première passerelle de communication (GTW1) agissant en tant que client et chaque deuxième passerelle de communication (GTW2, GTW3) agissant en tant que point d'accès au réseau de communication (NT1) ; et
- lors de réception, ladite au moins une partie du flux de données est reçue via les deuxièmes connexions sans fil établies avec la pluralité de deuxièmes passerelles de communication (GTW2, GTW3).

7. Procédé selon l'une quelconque des revendications 1 à 6, dans lequel lors de l'étape de réception, via la connexion sans fil, de ladite au moins une partie dudit flux de données transmise par la deuxième passerelle de communication (GTW2), la première passerelle de communication (GTW1) reçoit en parallèle une autre partie du flux de données depuis le réseau de communication (NT1) sans passer par une autre passerelle de communication agissant en tant que point d'accès.

8. Procédé selon la revendication selon l'une quelconque des revendications 1 à 7, dans lequel la connexion sans fil est de type Wifi.

9. Procédé de communication mis en œuvre par une première passerelle de communication (GTW2) faisant l'interface entre un réseau local (R2) et un réseau de communication (NT1), comprenant les étapes suivantes :
- envoi, à une deuxième passerelle de communication (GTW1), d'une donnée (DT1) indiquant que ladite première passerelle est en cours de réception d'un flux de données (ST1) provenant du réseau de communication (NT1) ;
- réception, provenant de la deuxième passerelle de communication (GTW1), d'une requête d'accès (RQ4) pour établir une connexion sans fil entre la première passerelle de communication (GTW2) agissant en tant que point d'accès au réseau de communication (NT1) et la deuxième passerelle de communication (GTW1) agissant en tant que client ; et
- transmission, à la deuxième passerelle de communication (GTW1), d'au moins une partie du flux de données via ladite connexion sans fil.

10. Procédé selon la revendication 9, dans lequel la première passerelle de communication (GTW1) envoie ladite donnée (DT1) à la deuxième passerelle de communication (GTW2) en réponse à une requête de contenu (RQ1) reçue en provenance de ladite deuxième passerelle (GTW2), la requête de contenu identifiant ledit flux de données (ST1).

11. Procédé selon la revendication 9 ou 10, dans lequel la première passerelle de communication (GTW2) reçoit le flux de données provenant du réseau de communication (NT1) en mode de diffusion multipoint,
et dans lequel, lors de l'étape de transmission, la première passerelle de communication (GTW2) transmet ladite au moins une partie du flux de données via la connexion sans fil en mode de connexion point à point avec la deuxième passerelle de communication (GTW1).

12. Programme d'ordinateur (PG1 ; PG2) comportant des instructions pour l'exécution des étapes d'un procédé selon l'une quelconque des revendications 1 à 11 lorsque ledit programme est exécuté par un ordinateur.

13. Première passerelle de communication (GTW1) configuré pour faire l'interface entre un réseau local (R1) et un réseau de communication (NT1), comprenant :
- un module d'identification (MD2) configuré pour identifier un flux de données (ST1) à transmettre au réseau local (R1) ;
- un module de détection (MD4) configuré pour détecter qu'une deuxième passerelle de communication (GTW2) est en cours de réception du flux de données (ST1) en provenance du réseau de communication (NT1) ;
- un module d'envoi (MD6) configuré pour envoyer une requête d'accès (RQ4) à la deuxième passerelle de communication (GTW2) pour établir une connexion sans fil entre la première passerelle de communication (GTW1) agissant en tant que client et la deuxième passerelle de communication (GTW2) agissant en tant que point d'accès au réseau de communication (NT1) ; et
- un module de réception (MD8) configuré pour recevoir, via ladite connexion sans fil, au moins une partie dudit flux de données transmis par la deuxième passerelle de communication (GTW2).

14. Première passerelle de communication (GTW2) configurée pour faire l'interface entre un réseau local (R3) et un réseau de communication (NT1), comprenant :
- un module d'envoi (MD20) configuré pour envoyer, à une deuxième passerelle de communication (GTW1), une donnée (DT1) indiquant que ladite première passerelle est en cours de réception d'un flux de données (ST1) provenant du réseau de communication (NT1) ;
- un module de réception (MD22) configuré pour recevoir, en provenance de la deuxième passerelle de communication (GTW1), une requête d'accès (RQ4) pour établir une connexion sans fil entre la première passerelle de communication (GTW2) agissant en tant que point d'accès au réseau de communication (NT1) et la deuxième passerelle de communication (GTW1) agissant en tant que client ; et
- un module de transmission (MD24) configuré pour transmettre, à la deuxième passerelle de communication (GTW1), au moins une partie du flux de données via ladite connexion sans fil.

## Patentansprüche

1. Kommunikationsverfahren, das durch ein erstes Kommunikations-Gateway (GTW1), welches die Schnittstelle zwischen einem lokalen Netz (R1) und einem Kommunikationsnetz (NT1) bildet, durchgeführt wird, umfassend die folgenden Schritte:
- Identifizieren eines an das lokale Netz (R1) zu übertragenden Datenstroms (ST1),
- Erfassen, dass ein zweites Kommunikations-Gateway (GTW2) gerade dabei ist, den Datenstrom (ST1) von dem Kommunikationsnetz (NT1) zu empfangen,
- Senden einer Zugangsanfrage (RQ4) an das zweite Kommunikations-Gateway (GTW2), um eine drahtlose Verbindung zwischen dem ersten Kommunikations-Gateway (GTW1), das als Client fungiert, und dem zweiten Kommunikations-Gateway (GTW2), das als Zugangspunkt zu dem Kommunikationsnetz (NT1) fungiert, herzustellen, und
- Empfangen wenigstens eines Teils des durch das zweite Kommunikations-Gateway (GTW2) übertragenen Datenstroms über die drahtlose Verbindung.

2. Verfahren nach Anspruch 1, bei dem der Schritt des Erfassens umfasst:
- Senden einer Inhaltsanfrage (RQ1) an das zweite Kommunikations-Gateway (GTW2), um anzufragen, ob das zweite Kommunikations-Gateway gerade dabei ist, den Datenstrom zu empfangen, und
- Empfangen eines Datums (DT1) von dem zweiten Kommunikations-Gateway (GTW2), das anzeigt, dass das zweite Gateway gerade dabei ist, den Datenstrom (ST1) von dem Kommunikationsnetz (NT1) zu empfangen.

3. Verfahren nach Anspruch 2, umfassend eine Bestimmung, dass der Datenstrom (ST1) einen vordefinierten Wahrscheinlichkeitsgrad aufweist, dass das zweite Kommunikations-Gateway (GTW2) gerade dabei ist, den Datenstrom (ST1) von dem Kommunikationsnetz (NT1) zu empfangen,
wobei das erste Kommunikations-Gateway (GTW1) die Inhaltsanfrage (RQ1) als Reaktion auf die Bestimmung an das zweite Kommunikations-Gateway (GTW2) sendet.

4. Verfahren nach Anspruch 3, bei dem die Bestimmung, dass der Datenstrom (ST1) den vordefinierten Wahrscheinlichkeitsgrad aufweist, dass das zweite Kommunikations-Gateway (GTW2) gerade dabei ist, den Datenstrom (ST1) zu empfangen, anhand wenigstens einer Eigenschaft des Datenstroms durchgeführt wird.

5. Verfahren nach einem der Ansprüche 1 bis 4, bei dem das zweite Kommunikations-Gateway (GTW2) den Datenstrom von dem Kommunikationsnetz (NT1) im Multipoint-Broadcast-Modus empfängt,
und wobei während des Empfangs-Schrittes das erste Kommunikations-Gateway (GTW1) den wenigstens einen Teil des Datenstroms über die drahtlose Verbindung im Punkt-zu-Punkt-Verbindungsmodus mit dem zweiten Kommunikations-Gateway (GTW2) empfängt.

6. Verfahren nach einem der Ansprüche 1 bis 5, bei dem:
- das erste Kommunikations-Gateway (GTW1) eine Zugriffsanfrage an mehrere zweite Kommunikations-Gateways (GTW2, GTW3) sendet, um eine zweite Verbindung zwischen dem ersten Kommunikations-Gateway (GTW1), das als Client fungiert, und jedem zweiten Kommunikations-Gateway (GTW2, GTW3), das als Zugangspunkt zum Kommunikationsnetz (NT1) fungiert, herzustellen, und
- beim Empfang der wenigstens eine Teil des Datenstroms über die mit der Vielzahl von zweiten Kommunikations-Gateways (GTW2, GTW3) hergestellten zweiten drahtlosen Verbindungen empfangen wird.

7. Verfahren nach einem der Ansprüche 1 bis 6, bei dem während des Schrittes des Empfangens des durch das zweite Kommunikations-Gateway (GTW2) übertragenen wenigstens einen Teils des Datenstroms über die drahtlose Verbindung das erste Kommunikations-Gateway (GTW1) parallel einen weiteren Teil des Datenstroms von dem Kommunikationsnetz (NT1) empfängt, ohne über ein weiteres als Zugangspunkt agierendes Kommunikations-Gateway zu gehen.

8. Verfahren nach einem der Ansprüche 1 bis 7, bei dem die drahtlose Verbindung vom Typ Wifi ist.

9. Kommunikationsverfahren, das durch ein erstes Kommunikations-Gateway (GTW2), welches die Schnittstelle zwischen einem lokalen Netz (R2) und einem Kommunikationsnetz (NT1) bildet, durchgeführt wird, umfassend die folgenden Schritte:
- Senden eines Datums (DT1) an ein zweites Kommunikations-Gateway (GTW1), das anzeigt, dass das erste Gateway gerade dabei ist, einen Datenstrom (ST1) von dem Kommunikationsnetz (NT1) zu empfangen,
- Empfangen einer Zugangsanfrage (RQ4) von dem zweiten Kommunikations-Gateway (GTW1), um eine drahtlose Verbindung zwischen dem ersten Kommunikations-Gateway (GTW2), das als Zugangspunkt zum Kommunikationsnetz (NT1) fungiert, und dem zweiten Kommunikations-Gateway (GTW1), das als Client fungiert, herzustellen, und
- Übertragen wenigstens eines Teils des Datenstroms über die drahtlose Verbindung an das zweite Kommunikations-Gateway (GTW1).

10. Verfahren nach Anspruch 9, bei dem das erste Kommunikations-Gateway (GTW1) als Reaktion auf eine von dem zweiten Gateway (GTW2) empfangene Inhaltsanfrage (RQ1) das Datum (DT1) an das zweite Kommunikations-Gateway (GTW2) sendet, wobei die Inhaltsanfrage den Datenstrom (ST1) identifiziert.

11. Verfahren nach einem der Ansprüche 9 oder 10, bei dem das erste Kommunikations-Gateway (GTW2) den Datenstrom von dem Kommunikationsnetz (NT1) im Multipoint-Broadcast-Modus empfängt,
und wobei während des Übertragungs-Schrittes das erste Kommunikations-Gateway (GTW2) den wenigstens einen Teil des Datenstroms über die drahtlose Verbindung im Punkt-zu-Punkt-Verbindungsmodus mit dem zweiten Kommunikations-Gateway (GTW1) empfängt.

12. Computerprogramm (PG1 ; PG2), umfassend Befehle für die Durchführung der Schritte eines Verfahrens nach einem der Ansprüche 1 bis 11, wenn das Programm durch einen Computer ausgeführt wird.

13. Erstes Kommunikations-Gateway (GTW1), das dazu ausgelegt ist, die Schnittstelle zwischen einem lokalen Netz (R1) und einem Kommunikationsnetz (NT1) zu bilden, umfassend:
- ein Identifikationsmodul (MD2), das dazu ausgelegt ist, einen an das lokale Netz (R1) zu übertragenden Datenstrom (ST1) zu identifizieren,
- ein Erfassungsmodul (MD4), das dazu ausgelegt ist, zu erfassen, dass ein zweites Kommunikations-Gateway (GTW2) gerade dabei ist, den Datenstrom (ST1) von dem Kommunikationsnetz (NT1) zu empfangen,
- ein Sendemodul (MD6), das dazu ausgelegt ist, eine Zugangsanfrage (RQ4) an das zweite Kommunikations-Gateway (GTW2) zu senden, um eine drahtlose Verbindung zwischen dem ersten Kommunikations-Gateway (GTW1), das als Client fungiert, und dem zweiten Kommunikations-Gateway (GTW2), das als Zugangspunkt zu dem Kommunikationsnetz (NT1) fungiert, herzustellen, und
- ein Empfangsmodul (MD8), das dazu ausgelegt ist, wenigstens einen Teil des durch das zweite Kommunikations-Gateway (GTW2) übertragenen Datenstroms über die drahtlose Verbindung zu empfangen.

14. Erstes Kommunikations-Gateway (GTW2), das dazu ausgelegt ist, die Schnittstelle zwischen einem lokalen Netz (R3) und einem Kommunikationsnetz (NT1) zu bilden, umfassend:
- ein Sendemodul (MD20), das dazu ausgelegt ist, ein Datum (DT1) an ein zweites Kommunikations-Gateway (GTW1) zu senden, das anzeigt, dass das erste Gateway gerade dabei ist, einen Datenstrom (ST1) von dem Kommunikationsnetz (NT1) zu empfangen,
- ein Empfangsmodul (MD22), das dazu ausgelegt ist, eine Zugangsanfrage (RQ4) von dem zweiten Kommunikations-Gateway (GTW1) zu empfangen, um eine drahtlose Verbindung zwischen dem ersten Kommunikations-Gateway (GTW2), das als Zugangspunkt zum Kommunikationsnetz (NT1) fungiert, und dem zweiten Kommunikations-Gateway (GTW1), das als Client fungiert, herzustellen, und
- ein Übertragungsmodul (MD24), das dazu ausgelegt ist, wenigstens einen Teil des Datenstroms über die drahtlose Verbindung an das zweite Kommunikations-Gateway (GTW1) zu übertragen.

## Claims

1. A communication method implemented by a first communication gateway (GTW1) interfacing between a local area network (R1) and a communication network (NT1), comprising the following steps:
- identifying a data stream (ST1) to be transmitted to the local area network (R1);
- detecting that a second communication gateway (GTW2) is receiving the data stream (ST1) coming from the communication network (NT1);
- sending an access request (RQ4) to the second communication gateway (GTW2) to establish a wireless connection between the first communication gateway (GTW1) acting as a client and the second communication gateway (GTW2) acting as an access point for the communication network (NT1); and
- receiving, via said wireless connection, at least part of said data stream transmitted by the second communication gateway (GTW2).

2. The method according to claim 1, wherein the detection step comprises:
- sending, to the second communication gateway (GTW2), a content request (RQ1) to ask whether the second communication gateway is receiving said data stream; and
- receiving, from the second communication gateway (GTW2), a data (DT1) indicating that said second gateway is receiving the data stream (ST1) coming from the communication network (NT1).

3. The method according to claim 2, comprising a determination that said data stream (ST1) has a predefined degree of probability that the second communication gateway (GTW2) is receiving the data stream (ST1) coming from the communication network (NT1),
wherein the first communication gateway (GTW1) sends the content request (RQ1) to the second communication gateway (GTW2) in response to said determination.

4. The method according to claim 3, wherein the determination that said data stream (ST1) has said predefined degree of probability that the second communication gateway (GTW2) is receiving the data stream (ST1) is carried out from at least one characteristic of said data stream.

5. The method according to any one of claims 1 to 4, wherein the second communication gateway (GTW2) receives the data stream coming from the communication network (NT1) in multipoint broadcast mode,
and wherein, during the receiving step, the first communication gateway (GTW1) receives said at least part of the data stream via the wireless connection in point-to-point connection mode with the second communication gateway (GTW2).

6. The method according to any one of claims 1 to 5, wherein:
- the first communication gateway (GTW1) sends one said access request to a plurality of second communication gateways (GTW2, GTW3) to establish a second connection between the first communication gateway (GTW1) acting as a client and each second communication gateway (GTW2, GTW3) acting as an access point for the communication network (NT1); and
- upon receipt, said at least part of the data stream is received via the second wireless connections established with the plurality of second communication gateways (GTW2, GTW3).

7. The method according to any one of claims 1 to 6, wherein during the step of receiving, via the wireless connection, said at least part of said data stream transmitted by the second communication gateway (GTW2), the first communication gateway (GTW1) receives in parallel another part of the data stream from the communication network (NT1) without passing through another communication gateway acting as an access point.

8. The method according to any one of claims 1 to 7, wherein the wireless connection is of the Wifi type.

9. A communication method implemented by a first communication gateway (GTW2) interfacing between a local area network (R2) and a communication network (NT1), comprising the following steps:
- sending, to a second communication gateway (GTW1), a data (DT1) indicating that said first gateway is receiving a data stream (ST1) coming from the communication network (NT1);
- receiving, from the second communication gateway (GTW1), an access request (RQ4) to establish a wireless connection between the first communication gateway (GTW2) acting as an access point to the communication network (NT1) and the second communication gateway (GTW1) acting as a client; and
- transmitting, to the second communication gateway (GTW1), at least part of the data stream via said wireless connection.

10. The method according to claim 9, wherein the first communication gateway (GTW1) sends said data (DT1) to the second communication gateway (GTW2) in response to a content request (RQ1) received from said second gateway (GTW2), the content request identifying said data stream (ST1).

11. The method according to claim 9 or 10, wherein the first communication gateway (GTW2) receives the data stream coming from the communication network (NT1) in multipoint broadcast mode,
and wherein, during the transmission step, the first communication gateway (GTW2) transmits said at least part of the data stream via the wireless connection in point-to-point connection mode with the second communication gateway (GTW1).

12. A computer program (PG1; PG2) including instructions for the execution of the steps of a method according to any one of claims 1 to 11 when said program is executed by a computer.

13. A first communication gateway (GTW1) configured to interface between a local area network (R1) and a communication network (NT1), comprising:
- an identification module (MD2) configured to identify a data stream (ST1) to be transmitted to the local area network (R1);
- a detection module (MD4) configured to detect that a second communication gateway (GTW2) is receiving the data stream (ST1) coming from the communication network (NT1);
- a sending module (MD6) configured to send an access request (RQ4) to the second communication gateway (GTW2) to establish a wireless connection between the first communication gateway (GTW1) acting as a client and the second communication gateway (GTW2) acting as an access point for the communication network (NT1); and
- a receiving module (MD8) configured to receive, via said wireless connection, at least part of said data stream transmitted by the second communication gateway (GTW2).

14. A first communication gateway (GTW2) configured to interface between a local area network (R3) and a communication network (NT1), comprising:
- a sending module (MD20) configured to send, to a second communication gateway (GTW1), a data (DT1) indicating that said first gateway is receiving a data stream (ST1) coming from the communication network (NT1);
- a receiving module (MD22) configured to receive, from the second communication gateway (GTW1), an access request (RQ4) to establish a wireless connection between the first communication gateway (GTW2) acting as an access point for the communication network (NT1) and the second communication gateway (GTW1) acting as a client; and
- a transmission module (MD24) configured to transmit, to the second communication gateway (GTW1), at least part of the data stream via said wireless connection.
